# EUROPÄISCHE PATENTSCHRIFT

(11) **EP 1 327 514 B1**
(45) Veröffentlichungstag und Bekanntmachung des Hinweises auf die Patenterteilung: **19.04.2006**
(21) Anmeldenummer: 03000461.8
(22) Anmeldetag: 10.01.2003
(51) Int. Cl.: B32B 29/02, B32B 7/04, E04F 15/02

(54) **Fussbodenbelagselement und Verfahren zu seiner Herstellung**
Floor covering element and method of manufacture
Elément de revêtement de sol et son procédé de fabrication

(30) Priorität: 11.01.2002 DE 10200793
(43) Veröffentlichungstag der Anmeldung: 16.07.2003
(73) Patentinhaber: BauschLinnemann GmbH, 48330 Sassenberg (DE)
(72) Erfinder: Reese, Harry, 86690 Mertingen (DE); Seiler, Karl, 89420 Hoechstädt (DE); Schunck, Stephan, Dr., 86161 Augsburg (DE)
(74) Vertreter: Cohausz & Florack

(56) Entgegenhaltungen:
- EP-A- 0 547 504
- DE-A- 19 722 339

## Beschreibung

Die vorliegende Erfindung bezieht sich auf ein Fußbodenbelagselement sowie Verfahren zu seiner Herstellung.

Nach dem Stand der Technik werden Fußbodenbelagselemente, insbesondere Laminate, aus einem mehrschichtigen Verbund hergestellt, der im allgemeinen vier Schichten aufweist. Danach wird auf einer Trägerplatte ein Dekorpapier auflaminiert, das auf seiner Sichtseite mit einem Dekor bedruckt ist und den typischen optischen Eindruck des späteren Fußbodenbelages erzeugt. Dieses Dekorpapier wird durch eine weitere Schicht aus einem Overlaypapier geschützt. Dekorpapier und Overlay sind beispielsweise mit Melamin imprägniert. Durch die Imprägnierung des Overlays wird dieses beim Verpressen mit dem Dekorpapier und der Trägerplatte durchsichtig, sodass das auf dem Dekorpapier aufgedruckte Dekor sichtbar wird. Auf der Rückseite der Trägerplatte wird gewöhnlich eine Gegenzugschicht angeordnet, die verhindert, dass sich die Trägerplatte durch die Beschichtung mit dem Dekorpapier und dem Overlay aufgrund deren Zugspannung durchbiegt. Der Gegenzug muß folglich genau so dimensioniert sein, dass er die Zugspannung von Dekorpapier und Overlaypapier ausgleicht.

Aus der DE-A1-197 22 339 ist ein Schichtverbundmaterial mit einer gegen mechanische Einflüsse resistenten Oberfläche bekannt, welche eine Trägerschicht aus Polypropylen, eine darauf angeordneten Dekorschicht und eine darauf angeordnete hitzegehärtete Schicht enthält.

Als Trägerplatten kommen üblicherweise Preßspanplatten, mitteldichte Faserplatten (MDF), hochdichte Faserplatten (HDF), Hartfaserplatten oder auch OSB-Platten zum Einsatz. Dekorpapiere sind definitionsgemäß diejenigen Papiere eines Laminates, die das Dekor tragen. Für sie werden in der Regel Spezialpapiere mit einem Gewicht von 50 bis 100 g/m² verwendet, die mit Holz- oder Phantasiedekoren bedruckt sind und mit Melamin- oder Harnstoffharzen oder einem Gemisch aus diesen in wenigstens einem Schritt imprägniert werden. Die Harzauflage beträgt dabei üblicherweise 80 -180 % bezogen auf das Papiergewicht. Bei dem Overlay handelt es sich im allgemeinen um ein sogenanntes Overlaypapier, das ein Flächengewicht zwischen 20 und 50 g/m² aufweist.

Der Gegenzug ist ein preiswertes, ebenfalls imprägniertes Papier, das als Balance dient, damit der gesamte Aufbau aufgrund der Vernetzung aufgrund der eingesetzten Kondendationsharze in Dekorpapier und Overlay nicht in eine Richtung schüsselt.

Die einzelnen Papiere, die zum Aufbau eines Laminates eingesetzt werden, werden meist von verschiedenen Herstellern hergestellt und erst beim Hersteller des Laminates zusammengefügt. Damit ergibt sich bei der Herstellung des Laminates ein sehr großer Fertigungsaufwand, da im allgemeinen vier verschiedene Schichten zuerst beschichtet und dann miteinander verpreßt werden müssen.

Nach dem Stand der Technik muß folglich für das Dekor ein Papier mit hoher Grammatur verwendet werden. Weiterhin wird das Dekor vor dem Aufbringen auf die Trägerschicht mit einem Kurztaktmelaminharz (KT-Harz) beispielsweise im Tauchverfahren imprägniert und anschließend mit der Trägerschicht verpreßt. Dies ist für den Hersteller des Fußbodenbelagselementes sehr aufwendig und mit hohen Kosten verbunden. Außerdem ist die Lagerfähigkeit imprägnierter Folien begrenzt.

Das Heißversiegeln von Papier und Kunststoffen ist für sicht seit längerem bekannt (EP-A2-0 547 504).

Aufgabe der vorliegenden Erfindung ist es nunmehr, ein Fußbodenbelagselement sowie Verfahren zu seiner Herstellung zur Verfügung zu stellen, die auf einfache und kostengünstige Weise hergestellt bzw. durchgeführt werden können.

Diese Aufgabe wird durch das Verfahren gemäß Patentanspruch 1 sowie das Fußbodenbelagselement gemäß Patentanspruch 22 gelöst. Vorteilhafte Weiterbildung des erfindungsgemäßen Verfahrens sowie des erfindungsgemäßen Fußbodenbelagelementes werden in den jeweiligen abhängigen Ansprüchen gegeben.

Erfindungsgemäß wird nunmehr statt eines üblichen Dekorpapieres ein Vorimprägnat oder ein geleimtes Papier verwendet, wobei hier eine Grammatur des Papiers von 40-60 g/m² ausreicht. Dieses Papier ist erheblich dünner und daher auch kostengünstiger als das Papier, das im Stand der Technik für die Dekorschicht verwendet wird. Derartige Papiere besitzen von Haus aus bereits eine gewisse ausreichende Spaltfestigkeit, so dass sie als Dekorpapiere verwendet werden können.

Im Gegensatz zum Stand der Technik erfolgt jetzt jedoch nicht vor dem Auftrag des Dekorpapiers auf die Trägerschicht eine Imprägnierung mit KT-Harzen. Stattdessen wird bei der Herstellung des Dekorpapieres auf der später der Trägerschicht zugewandten Rückseite des Dekorpapiers eine heißsiegelfähige Dispersion, vorteilhafterweise auf Basis von Acrylpolymeren, aufgetragen. In dieser Form ist das Dekorpapier dann langfristig lager- und transportierbar. Bei sachgemäßer Lagerung beträgt die Haltbarkeit der Fuge einer Rolle derartigen rückseitig beschichteten Dekorpapiers >6 Monate.

Als heißsiegelfähige Dispersion kann beispielsweise der Heißkleber Primal EP-6000 der Firma Rohm & Haas verwendet werden. Er wird vorteilhafterweise auf die Rückseite des Dekorpapiers in einer Menge von 5 - 5 0 g/m², vorzugsweise 30 g/m² trocken aufgetragen.

Das so vom Papierhersteller vorbereitete und zwischenlagerungsfähige Dekorpapier wird nun beim Hersteller der Fußbodenbelagselemente unmittelbar verarbeitet. Hierzu wird es bei einer Temperatur zwischen 80° und 200°C, vorteilhafterweise zwischen 120° und 160°C, mit einem Druck von 0,098 bis 4,9 MPa (1 bis 50 kp/cm²), vorteilhafterweise zwischen 0,29 und 0,98 MPa(3 und 10 kp/cm²) für 1-150 s vorteilhafterweise 8-20 s, mit der Trägerschicht verpreßt.

Auf diese Art und Weise wird eine aufwendige Imprägnierung der Dekorschicht beim Belaghersteller mit KT-Harzen vermieden.

Vorteilhafterweise kann die heißsiegelfähige Dispersion auch eingefärbt werden, um beispielsweise einen Fonds für einen Musteraufdruck auf der Oberseite oder Unterseite der Dekorschicht zu erzeugen. Die Dispersion kann auch mit weiteren Zusatzstoffen, wie beispielsweise Verdickern o. ä. abgemischt werden.

Gegebenenfalls wird zugleich als oberste Lage ein Overlay aufgebracht, das abriebfest ausgerüstet wird. Die Herstellung des Fußbodenbelagselementes durch gleichzeitiges Verpressen von Trägerschicht, Dekorschicht, Overlay und gegebenenfalls Gegenzugschicht erfolgt vorteilhafterweise bei 140-220°C, 0,79 bis 9,8 MPa (8 bis 100 kp/cm²) für 4-50 s, vorteilhafterweise bei 160-180°C, 1,96 bis 4,9 MPa (20 bis 50 kp/cm²) für 12-25 s.

Im folgenden werden zwei Beispiele erfindungsgemäßer Fußbodenbelagselemente gegeben.

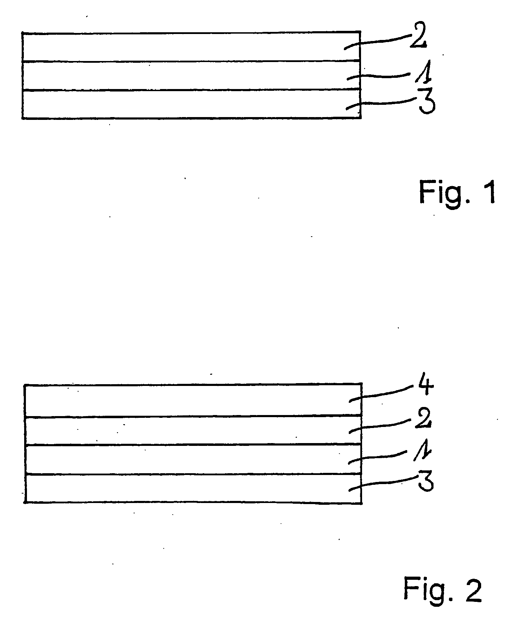

Fig. 1 zeigt ein Fußbodenbelagselement mit einer Trägerschicht 1 (Laminatträger aus Spanplatte, MDF), auf deren einer Seite ein Dekorpapier 2 aufgebracht ist. Das Dekorpapier 2 ist auf seiner der Trägerschicht 1 zugewandten Seite mit einer heißsiegelfähigen Dispersion aus Primal EP-6000 der Firma Rohm & Haas beschichtet und wurde bei einem Druck von 3,6 kp/cm² für 25 s bei einer Temperatur von 170°C mit der Trägerschicht 1 verpreßt. Auf der der Dekorschicht 2 abgewandten Seite der Trägerschicht 1 wurde zugleich eine Gegenzugschicht 3 aufgebracht, um ein Durchbiegen des Bodenbelagselementes zu verhindern. Fig. 2 zeigt ein weiteres entsprechendes Bodenbelagselement bei dem mit gleichen Bezugszeichen gleiche Elemente wie in Fig. 1 bezeichnet sind. In diesem Falle ist zusätzlich auf der der Trägerschicht 1 abgewandten Seite des Dekorpapiers 2 ein Overlay 4 aufgebracht, das mit Melaminharz beschichtet und beim Verpressen mit der Dekorschicht transparent wird. Dieses Overlay 4 ist weiterhin auf seiner Oberfläche durch Einlagern von Korundpartikeln mit einer Korngröße zwischen 1 und 80 µm in einer Menge von 1-20 g/m² abriebfest beschichtet. Dieses Bodenbelagselement wurde durch gleichzeitiges Verpressen von Gegenzugschicht 3, Trägerschicht 1, Dekorschicht 2 und Overlay 4 unter den für Fig. 1 angegebenen Bedingungen hergestellt.

## Patentansprüche

1. Verfahren zur Herstellung eines Fußbodenbelagelementes,
**dadurch gekennzeichnet, daß** ein Dekorpapier auf seiner Rückseite mit einer heiß siegelfähigen Dispersion beschichtet wird und das Dekorpapier unter Druck- und Wärmeeinwirkung mit seiner heiß siegelfähig beschichteten Seite auf eine Trägerschicht aufgebracht wird.

2. Verfahren nach Anspruch 1,
**dadurch gekennzeichnet, daß** als Dekorpapier ein vorimprägniertes oder geleimtes Dünnschichtpapier verwendet wird.

3. Verfahren nach Anspruch 1 oder 2,
**dadurch gekennzeichnet, daß** als Dekorpapier ein Papier mit einer Grammatur zwischen 40 und 60 g/m² verwendet wird.

4. Verfahren nach einem der Ansprüche 1 bis 3,
**dadurch gekennzeichnet, daß** das Dekorpapier mit einer heiß siegelfähigen Dispersion auf Basis von Acrylpolymeren beschichtet wird.

5. Verfahren nach einem der Ansprüche 1 bis 4,
**dadurch gekennzeichnet, daß** die heiß siegelfähige Dispersion vor dem Auftrag auf das Dekorpapier eingefärbt und/oder der heiß siegelfähigen Dispersion weitere Zusatzstoffe, beispielsweise Verdicker, zugemischt werden.

6. Verfahren nach einem der Ansprüche 1 bis 5,
**dadurch gekennzeichnet, daß** das Dekorpapier bei einem Druck von 0,098 bis 4,9 MPa (1 bis 50 kp/cm²), einer Pressdauer zwischen 1 und 150 s und einer Temperatur zwischen 80 und 200°C auf die Trägerschicht aufgebracht wird.

7. Verfahren nach einem der Ansprüche 1 bis 6,
**dadurch gekennzeichnet, daß** das Dekorpapier bei einem Druck von 0,29 bis 0,98 MPa (3 bis 10 kp/cm²), einer Pressdauer zwischen 8 und 20 s und einer Temperatur zwischen 120 und 160°C auf die Trägerschicht aufgebracht wird.

8. Verfahren nach einem der Ansprüche 1 bis 7,
**dadurch gekennzeichnet, daß** das Dekorpapier vor oder nach dem Aufbringen auf die Trägerschicht aus seiner der Trägerschicht abgewandten Seite beschichtet wird.

9. Verfahren nach Anspruch 8,
**dadurch gekennzeichnet, daß** das Dekorpapier lakkiert wird.

10. Verfahren nach Anspruch 8 oder 9,
**dadurch gekennzeichnet, daß** das Dekorpapier abriebfest beschichtet wird.

11. Verfahren nach einem der Ansprüche 1 bis 10,
**dadurch gekennzeichnet, daß** auf das Dekorpapier ohne weitere Imprägnierung des Dekorpapiers anschließend ein Overlay aufgebracht wird.

12. Verfahren nach einem der Ansprüche 1 bis 4,
**dadurch gekennzeichnet, daß** das Dekorpapier gemeinsam mit einem Overlay auf die Trägerschicht aufgebracht wird.

13. Verfahren nach einem der Ansprüche 1 bis 12,
**dadurch gekennzeichnet, daß** das Dekorpapier und das Overlay bei einem Druck von 0,79 bis 9,8 MPa (8 bis 100 kp/cm²), einer Pressdauer zwischen 4 und 50 s und einer Temperatur zwischen 140 und 220°C auf die Trägerschicht aufgebracht wird.

14. Verfahren nach einem der vorhergehenden Ansprüche 1 bis 13,
**dadurch gekennzeichnet, daß** das Dekorpapier und das Overlay bei einem Druck von 1,96 bis 4,9 MPa (20 bis 50 kp/cm²), einer Pressdauer zwischen 12 und 25 s und einer Temperatur zwischen 160 und 180°C auf die Trägerschicht aufgebracht wird.

15. Verfahren nach einem der Ansprüche 7 bis 10,
**dadurch gekennzeichnet, daß** ein abriebfest ausgerüstetes Overlay aufgebracht wird.

16. Verfahren nach Anspruch 15,
**dadurch gekennzeichnet, daß** das Overlay auf seiner Oberseite eine abriebfeste Schicht aufweist, die ein abriebfestes Material, gegebenenfalls gemischt mit einem Bindemittel, enthält.

17. Verfahren nach Anspruch 16,
**dadurch gekennzeichnet, daß** die abriebfeste Schicht als abriebfestes Material Al₂O₃~haltige Partikel (Korund) enthält.

18. Verfahren nach Anspruch 17,
**dadurch gekennzeichnet, daß** die abriebfeste Schicht als abriebfestes Material Korund mit einer Korngröße zwischen 1 und 80 um in einer Menge von 1 bis 20 g/m² enthält.

19. Verfahren nach einem der Ansprüche 1 bis 18,
**dadurch gekennzeichnet, daß** auf die Dekorschicht ein Overlay aufgebracht wird, das als Imprägnierungsmittel und/oder als Bindemittel Melaminharz, eine Mischung aus Melaminharz und Harnstoffharz, gegebenenfalls mit einer α-Zellulose gemischt, aufweist.

20. Verfahren nach einem der Ansprüche 1 bis 19,
**dadurch gekennzeichnet, daß** auf die Trägerschicht auf der der Dekorschicht abgewandten Seite der Trägerschicht eine Gegenzugschicht aufgebracht wird.

21. Verfahren nach Anspruch 20,
**dadurch gekennzeichnet, daß** die Dekorschicht, die Gegenzugschicht und gegebenenfalls auch das Overlay in demselben Preßvorgang auf die Trägerschicht aufgebracht werden.

22. Fußbodenbelagselement mit einer Trägerschicht und einer auf einer ersten Oberfläche der Trägerschicht aufgebrachten Dekorschicht,
**dadurch gekennzeichnet, daß** die Dekorschicht auf der Trägerschicht mittels einer heiß siegelfähigen Dispersion aufgebracht ist.

23. Fußbodenbelagselement nach Anspruch 22,
**dadurch gekennzeichnet, daß** das Dekorpapier eine Grammatur zwischen 40 und 60 g/m² aufweist.

24. Fußbodenbelagselement nach Anspruch 22 oder 23,
**dadurch gekennzeichnet, daß** die heiß siegelfähige Dispersion eine Dispersion auf Basis von Acrylpolymeren ist.

25. Fußbodenbelagselement nach einem der Ansprüche 22 bis 24,
**dadurch gekennzeichnet, daß** die heißsiegelfähige Dispersion eingefärbt ist und/oder weitere Zusatzstoffe, beispielsweise Verdicker, enthält.

26. Fußbodenbelagselement nach einem der Ansprüche 22 bis 25, **dadurch gekennzeichnet, daß** auf dem Dekorpapier ohne weitere Imprägnierung des Dekorpapiers ein Overlay angeordnet ist.

27. Fußbodenbelagselement nach Anspruch 26,
**dadurch gekennzeichnet, daß** das Overlay abriebfest ausgerüstet ist.

28. Fußbodenbelagselement nach Anspruch 27,
**dadurch gekennzeichnet, daß** das Overlay auf seiner Oberseite eine abriebfeste Schicht aufweist, die ein abriebfestes Material, gegebenenfalls gemischt mit einem Bindemittel, enthält.

29. Fußbodenbelagselement nach Anspruch 28,
**dadurch gekennzeichnet, daß** die abriebfeste Schicht als abriebfestes Material Al₂O₃-haltige Partikel (Korund) enthält.

30. Fußbodenbelagselement nach Anspruch 29,
**dadurch gekennzeichnet, daß** die abriebfeste Schicht als abriebfestes Material Korund mit einer Korngröße zwischen 1 und 80 um in einer Menge von 1 bis 20 g/m² enthält.

31. Fußbodenbelagselement nach einem der Ansprüche 22 bis 30,
**dadurch gekennzeichnet, daß** auf der Dekorschicht ein Overlay angeordnet ist, das als Imprägnierungsmittel und/oder als Bindemittel Melaminharz, eine Mischung aus Melaminharz und Harnstoffharz, gegebenenfalls mit einer α-Zellulose gemischt, aufweist.

32. Fußbodenbelagselement nach einem der Ansprüche 22 bis 31,
**dadurch gekennzeichnet, daß** auf der Trägerschicht auf der der Dekorschicht abgewandten Seite eine Gegenzugschicht angeordnet ist.

33. Fußbodenbelagselement nach einem der Ansprüche 22 bis 32, hergestellt nach einem Verfahren gemäß einem der Ansprüche 1 bis 20.

## Claims

1. A method for the production of a floor covering element, **characterised in that** a decorative paper is coated on its rear side with a hot-sealable dispersion and the decorative paper is applied with its hot-sealably coated side under the effect of pressure and heat onto a carrier layer.

2. The method according to claim 1, **characterised in that** a pre-impregnated or glued thin-layer paper is used as a decorative paper.

3. The method according to claim 1 or 2, **characterised in that** a paper with a grammage between 40 and 60 g/m² is used as a decorative paper.

4. The method according to any one of claims 1 to 3, **characterised in that** the decorative paper is coated with a hot-sealable dispersion based on acryl polymers.

5. The method according to any one of claims 1 to 4, **characterised in that** the hot-sealable dispersion is coloured before the application onto the decorative paper and/or further additives, for example thickener, are added by mixing to the hot-sealable dispersion

6. The method according to any one of claims 1 to 5, **characterised in that** the decorative paper is applied onto the carrier layer at a pressure of 0.098 to 4.9 MPa (1 to 50 kp/cm²), with a pressing time between 1 and 150 s and at a temperature between 80 and 200°C.

7. The method according to any one of claims 1 to 6, **characterised in that** the decorative paper is applied onto the carrier layer at a pressure of 0.29 to 0.98 MPa (3 to 10 kp/cm²), with a pressing time between 8 and 20 s and at a temperature between 120 and 160°C.

8. The method according to any one of claims 1 to 7, **characterised in that** the decorative paper is coated on its side facing away from the carrier layer before or after the application onto the carrier layer.

9. The method according to claim 8, **characterised in that** the decorative paper is lacquered.

10. The method according to claim 8 or 9, **characterised in that** the decorative paper is coated so as to be abrasion-resistant.

11. The method according to any one of claims 1 to 10, **characterised in that** an overlay is applied afterwards onto the decorative paper without further impregnation of the decorative paper.

12. The method according to any one of claims 1 to 4, **characterised in that** the decorative paper together with an overlay is applied onto the carrier layer.

13. The method according to any one of claims 1 to 12, **characterised in that** the decorative paper and the overlay is applied onto of the carrier layer at a pressure of 0.79 to 9.8 MPa (8 to 100 kp/cm²), with a pressing time between 4 and 50 s and at a temperature between 140 and 220°C.

14. The method according to any one of claims 1 to 13, **characterised in that** the decorative paper and the overlay is applied onto of the carrier layer at a pressure of 1.96 to 4.9 MPa (20 to 50 kp/cm²), with a pressing time between 12 and 25 s and at a temperature between 160 and 180°C.

15. The method according to any one of claims 7 to 10, **characterised in that** an overlay equipped so as to be abrasion-resistant is applied.

16. The method according to claim 15, **characterised in that** the overlay has on its upper side an abrasion-resistant layer, which contains an abrasion-resistant material, optionally mixed with a binder.

17. The method according to claim 16, **characterised in that** the abrasion-resistant layer contains Al₂O₃₋containing particles (corundum) as an abrasion-resistant material.

18. The method according to claim 17, **characterised in that** the abrasion-resistant layer contains corundum with a grain size between 1 and 80 µm in a quantity of 1 to 20 g/m² as an abrasion-resistant material.

19. The method according to any one of claims 1 to 18, **characterised in that** there is applied onto the decorative layer an overlay which has melamine resin, a mixture of melamine resin and urea resin, optionally mixed with an α-cellulose, as an impregnation agent and/or as a binder.

20. The method according to any one of claims 1 to 19, **characterised in that** a backing layer is applied onto the carrier layer on the side of the carrier layer facing away from the decorative layer.

21. The method according to claim 20, **characterised in that** the decorative layer, the backing layer and optionally also the overlay are applied in the same pressing process onto the carrier layer.

22. A floor covering element with a carrier layer and a decorative layer applied on a first surface of the carrier layer, **characterised in that** the decorative layer is applied on the carrier layer by means of a hot-sealable dispersion.

23. The floor covering element according to claim 22, **characterised in that** the decorative paper has a grammage between 40 and 60 g/m².

24. The floor covering element according to claim 22 or 23, **characterised in that** the hot-sealable dispersion is a dispersion based on acryl polymers.

25. The floor covering element according to any one of claims 22 to 24, **characterised in that** the hot-sealable dispersion is coloured and/or contains further additives, for example thickener.

26. The floor covering element according to any one of claims 22 to 25, **characterised in that** an overlay is arranged on the decorative paper without further impregnation of the decorative paper.

27. The floor covering element according to claim 26, **characterised in that** the overlay is equipped so as to be abrasion-resistant.

28. The floor covering element according to claim 27, **characterised in that** the overlay has on its upper side an abrasion-resistant layer which contains an abrasion-resistant material, optionally mixed with a binder.

29. The floor covering element according to claim 28, **characterised in that** the abrasion-resistant layer contains Al₂O₃-containing particles (corundum) as an abrasion-resistant material.

30. The floor covering element according to claim 29, **characterised in that** the abrasion-resistant layer contains corundum with a grain size between 1 and 80 µm in a quantity of 1 to 20 g/m² as an abrasion-resistant material.

31. The floor covering element according to any one of claims 22 to 30, **characterised in that** there is arranged on the decorative layer an overlay which has melamine resin, a mixture of melamine resin and urea resin, optionally mixed with an α-cellulose, as an impregnation agent and/or as a binder.

32. The floor covering element according to any one of claims 22 to 31, **characterised in that** a backing layer is arranged on the carrier layer on the side facing away from the decorative layer.

33. The floor covering element according to any one of claims 22 to 32, produced by a method according to any one of claims 1 to 20.

## Revendications

1. Procédé de fabrication d'un élément de revêtement de sol, **caractérisé en ce que** la face arrière d'un papier décor est revêtue d'une dispersion thermosoudable, et que le papier décor est appliqué sur une couche de support, par sa face à revêtement thermosoudable, en étant soumis à une pression et de la chaleur.

2. Procédé selon la revendication 1, **caractérisé en ce que** le papier décor utilisé est un papier mince préimprégné ou préencollé.

3. Procédé selon la revendication 1 ou 2. **caractérisé en ce que** le papier décor utilisé est un papier ayant un grammage compris entre 40 et 60 g/m².

4. Procédé selon l'une des revendications 1 à 3, **caractérisé en ce que** le papier décor est enduit d'une dispersion thermosoudable à base de polymères acryliques.

5. Procédé selon l'une des revendications 1 à 4, **caractérisé en ce que** la dispersion thermosoudable est teintée avant d'être appliquée sur le papier décor, et/ou que la dispersion thermosoudable est additionnée d'additifs supplémentaires, par exemple d'épaississants.

6. Procédé selon l'une des revendications 1 à 5, **caractérisé en ce que** le papier décor est appliqué sur la couche de support sous une pression de 0,098 à 4,9 MPa (1 à 50 kp/cm²), pour une durée de compression comprise entre 1 et 150 s, et à une température entre 80 et 200°C.

7. Procédé selon l'une des revendications 1 à 6, **caractérisé en ce que** le papier décor est appliqué sur la couche de support sous une pression de 0,29 à 0,98 MPa (3 à 10 kp/cm²), pour une durée de compression comprise entre 8 et 20 s, et à une température entre 120 et 160°C.

8. Procédé selon l'une des revendications 1 à 7, **caractérisé en ce que** la face du papier décor, qui est éloignée de la couche de support, est enduite avant ou après l'application sur la couche de support.

9. Procédé selon la revendication 8, **caractérisé en ce que** le papier décor est verni.

10. Procédé selon la revendication 8 ou 9, **caractérisé en ce que** le papier décor reçoit un revêtement de protection résistant à l'abrasion.

11. Procédé selon l'une des revendications 1 à 10, **caractérisé en ce qu'**une couche *overlay* est ensuite appliquée sur le papier décor, sans autre imprégnation du papier décor.

12. Procédé selon l'une des revendications 1 à 4, **caractérisé en ce que** le papier décor et son revêtement *overlay* sont déposés ensemble sur la couche de support.

13. Procédé selon l'une des revendications 1 à 12, **caractérisé en ce que** le papier décor et la couche *overlay* sont appliqués sur la couche de support sous une pression de 0,79 à 9,8 MPa (8 à 100 kp/cm²), pour une durée de compression comprise entre 4 et 50 s, et à une température entre 140 et 220°C.

14. Procédé selon l'une des revendications précédentes 1 à 13, **caractérisé en ce que** le papier décor et la couche *overlay* sont appliqués sur la couche de support sous une pression de 1.96 à 4.9 MPa (20 à 50 kp/cm²), pour une durée de compression comprise entre 12 et 25 s, et à une température entre 160 et 180°C.

15. Procédé selon l'une des revendications 7 à 10, **caractérisé en ce que** la couche *overlay* appliquée est une couche traitée antiabrasion.

16. Procédé selon la revendication 15, **caractérisé en ce que** la couche *overlay* comporte, sur sa face supérieure, une couche résistant à l'abrasion contenant une matière antiabrasion, le cas échéant mélangée à un liant.

17. Procédé selon la revendication 16, **caractérisé en ce que** la couche résistant à l'abrasion contient des particules contenant du Al₂O₃ (corindon) comme matière antiabrasion.

18. Procédé selon la revendication 17, **caractérisé en ce que** la à couche résistant à l'abrasion contient, comme matière antiabrasion, du corindon ayant une granulométrie comprise entre 1 et 80 µm, dans une proportion de 1 à 20 g/m².

19. Procédé selon l'une des revendications 1 à 18, **caractérisé en ce qu'**une couche *overlay* est appliquée sur la couche décor, qui comporte, comme agent d'imprégnation et/ou liant, une résine de mélamine, un mélange de résine de mélamine et de résine d'aminoplaste, le cas échéant mélangé à de l'α cellulose.

20. Procédé selon l'une des revendications 1 à 19, **caractérisé en ce qu'**une couche de contre-traction est appliquée sur la couche de support, sur la face de celle-ci, qui est éloignée de la couche décor.

21. Procédé selon la revendication 20, **caractérisé en ce que** la couche décor, la couche de contre-traction et, le cas échéant, la couche *overlay,* sont appliquées sur la couche de support dans la même opération de compression.

22. Elément de revêtement de sol comprenant une couche de support et une couche de décor appliquée sur une première surface de la couche de support, **caractérisé en ce que** la couche décor est appliquée sur la couche de support par l'intermédiaire d'une dispersion thermosoudable.

23. Elément de revêtement de sol selon la revendication 22. **caractérisé en ce que** le papier décor présente un grammage compris entre 40 et 60 g/m².

24. Elément de revêtement de sol selon la revendication 22 ou 23. **caractérisé en ce que** la dispersion thermosoudable est une dispersion à base de polymères acryliques.

25. Elément de revêtement de sol selon l'une des revendications 22 à 24, **caractérisé en ce que** la dispersion thermosoudable est teintée et/ou contient des additifs supplémentaires, par exemple des épaississants.

26. Elément de revêtement de sol selon l'une des revendications 22 à 25, **caractérisé en ce qu'**une couche *overlay* est disposée sur le papier décor, sans autre imprégnation du papier décor.

27. Elément de revêtement de sol selon la revendication 26, **caractérisé en ce que** la couche *overlay* est traitée antiabrasion.

28. Elément de revêtement de sol selon la revendication 27, **caractérisé en ce que** la couche *overlay* comporte, sur sa face supérieure, une couche résistant à l'abrasion contenant une matière antiabrasion, le cas échéant mélangée à un liant.

29. Elément de revêtement de sol selon la revendication 28, **caractérisé en ce que** la couche résistant à l'abrasion contient des particules contenant du Al₂O₃ (corindon) comme matière antiabrasion.

30. Elément de revêtement de sol selon la revendication 29, **caractérisé en ce que** la couche résistant à l'abrasion contient, comme matière antiabrasion, du corindon ayant une granulométrie comprise entre 1 et 80 *µ*m, dans une proportion de 1 à 20 g/m².

31. Elément de revêtement de sol selon l'une des revendications 22 à 30, **caractérisé en ce qu'**une couche *overlay* est appliquée sur la couche décor, qui comporte, comme agent d'imprégnation et/ou liant, une résine de mélamine, un mélange de résine de mélamine et de résine d'aminoplaste, le cas échéant mélangé à de l'α cellulose.

32. Elément de revêtement de sol selon l'une des revendications 22 à 31, **caractérisé en ce qu'**une couche de contre-traction est disposée sur la couche de support, sur la face de celle-ci, qui est éloignée de la couche décor.

33. Elément de revêtement de sol selon l'une des revendications 22 à 32, élaboré selon un procédé selon l'une des revendications 1 à 20.
